# EUROPÄISCHE PATENTSCHRIFT

(11) **EP 0 442 404 B1**
(45) Veröffentlichungstag und Bekanntmachung des Hinweises auf die Patenterteilung: **10.08.1994**
(21) Anmeldenummer: 91101842.2
(22) Anmeldetag: 09.02.1991
(51) Int. Cl.: H04N 5/14, H04N 7/137

(54) **Verfahren zur Ermittlung von Bewegungsinformationen aus Bildsignalen**
Method for determining movement informations of picture signals
Procédé de détection d'informations de mouvement de signaux d'image

(30) Priorität: 14.02.1990 DE 4004437
(43) Veröffentlichungstag der Anmeldung: 21.08.1991
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Hou, Peihong, c/o GRUNDIG E.M.V., El. Mech. Vers., W-8510 Fürth (DE)

(56) Entgegenhaltungen:
- RUNDFUNKTECHNISCHE MITTEILUNGEN, Heft 4, Jg. 34, 1990, Hamburg PEIHONG HOU, ULRICH SCHMITZ "Verbesserte Bewegungschätzung für Fernsehbilder" Seiten 157-164
- 2nd INTERNATIONAL WORKSHOP ON SIGNAL PROCESSING FOR HDTV, 29. Februar - 2. März 1988, L'Aquila, Italy TH. REUTER, H.D. HOEHNE "Motion Vector Estimation for improved Standards Conversion" Seiten 345-354

## Beschreibung

Die Erfindung betrifft ein Verfahren zur Ermittlung von Bewegungsinformationen aus Bildsignalen mit den im Oberbegriff des Anspruchs 1 angegebenen Merkmalen.

Sowohl bei der Umsetzung von Bewegtbildern zwischen unterschiedlichen Fernsehnormen als auch bei der Erhöhung der Bildwechselfrequenz ist eine Zwischenbildinterpolation notwendig. Von wesentlicher Bedeutung dabei ist die Verwendung einer bewegungskompensativen Technik, um unter Beibehaltung der gegebenen örtlichen Auflösung eine für das menschliche Auge fehlerfreie Bewegungsdarstellung zu erhalten.

Ein Großteil der Änderungen in aufeinanderfolgenden Bildern einer Bildsequenz ist auf Bewegungen der abgebildeten Objekte und/oder der Aufnahmekamera zurückzuführen. Diese Änderungen können lokal als eine Verschiebung der entsprechenden Bildinhalte in Folgebildern beschrieben werden. Mittels einer bewegungskompensativen Technik bei der Bildinterpolation soll nun erreicht werden, daß der Bildinhalt zu einem gegebenen Zeitpunkt an der richtigen örtlichen Position, welche durch die Objektbewegung festgelegt ist, wiedergegeben wird.

Voraussetzung für eine bewegungskompensative Bildinterpolation ist die Ermittlung von korrekten Bewegungsinformationen. Zur Ermittlung dieser Bewegungsinformationen wird eine Bewegungsschätzung durchgeführt, welche die Aufgabe hat, sämtliche Bewegungen in Bildern zu erkennen und geeignet zu beschreiben.

In der Literatur sind bereits verschiedene Verfahren zur Ermittlung von Bewegungsinformationen unter Verwendung einer Bewegungsschätzung beschrieben. In diesem Zusammenhang wird beispielsweise auf die folgenden Literaturstellen hingewiesen:
- BBC Research Department Report No. BBC RD 1987/11, 1987: "Television motion measurement for DATV and other application" (Thomas);
- 2nd International Workshop on Signal Processing for HDTV, L'Aquila, Italy, 29. Febr.-2. March, 1988: "Motion vector estimation for improved standards conversion" (Reuter, Höhne); und
- IEEE Transactions on Communications, Vol. COM-29, No. 12, Dec. 1981, S. 1799-1808: "Displacement measurement and its application in interframe image coding" (Jain, Jain).

Alle bisher bekannten Verfahren basieren auf der Annahme, daß sich der Bildinhalt von Bild zu Bild wenig ändert und deshalb in aufeinanderfolgenden Bildern wieder zu finden ist. Die Bewegungsschätzung kann folglich als ein Suchprozeß nach einem bestimmten Bildinhalt in einem Folgebild angesehen werden, welcher auf dem direkten Vergleich der Helligkeitswerte des Bildsignals in Folgebildern beruht.

Um die Bewegungen in Bildern genau beschreiben zu können, sind Informationen sowohl über die Bewegungsart, die Bewegungsquantität und die Bewegungsrichtung als auch über die lokale Verteilung unterschiedlicher Bewegungen im Bild notwendig. Häufig wird die Bewegungsschätzung in zwei Stufen unterteilt: die globale Bewegungserkennung und die anschließende lokale Bewegungszuordnung. Mittels der globalen Bewegungserkennung, bei der das Bild in große Blöcke unterteilt wird und korrespondierende Blöcke aufeinanderfolgender Bilder miteinander verglichen werden, sollen Bewegungen innerhalb eines Bildes erkannt und beispielsweise durch Bewegungsvektoren beschrieben werden. Diese werden dann u.a. dazu verwendet, im Rahmen der lokalen Bewegungszuordnung die exakte lokale Verteilung unterschiedlicher Bewegungen innerhalb einer Bildfolge anzugeben. Zur Ermittlung der exakten lokalen Verteilung kann beispielsweise die sog. "Matching-Technik" verwendet werden, wie sie in dem oben genannten BBC-Report unter Abschnitt 2.2 beschrieben ist. Dabei wird das Bild in kleine Blöcke unterteilt und für jeden Block der ähnlichste Block im Folgebild gesucht, wobei beispielsweise der Betrag des mittleren quadratischen Fehlers oder des mittleren absoluten Fehlers als Ähnlichkeitskriterium verwendet wird.

Bei einem derartigen Vorgehen können jedoch Zuordnungsfehler auftreten, welche beispielsweise auf Beleuchtungsänderungen bzw. Helligkeitsschwankungen in Folgebildern zurückzuführen sind, wie sie u. a. bei Bewegungen eines Objektes in einen Bereich mit veränderten Lichtverhältnissen vorliegen. Ferner können Zuordnungsfehler auch dann auftreten, wenn bei der lokalen Bewegungszuordnung sehr kleine Blöcke verwendet werden, da dann in einem Folgebild oft mehrere Blöcke ermittelt werden, die dem Ausgangsblock gleich gut entsprechen.

Ausgehend vom vorstehend beschriebenen Stand der Technik liegt der Erfindung die Aufgabe zugrunde, ein Verfahren der im Oberbegriff des Anspruchs 1 angegebenen Art derart weiterzubilden, daß die Häufigkeit der bei den bekannten Verfahren auftretenden Zuordnungsfehler auf einfache Weise stark reduziert ist.

Diese Aufgabe wird bei einem Verfahren mit den im Oberbegriff des Anspruchs 1 angegebenen Merkmalen durch die im kennzeichnenden Teil des Anspruchs 1 angegebenen Merkmale gelöst. Vorteilhafte Ausgestaltungen des im Anspruch 1 beschriebenen Verfahrens sind in den Ansprüchen 2-5 beschrieben.

Die Vorteile der Erfindung bestehen im wesentlichen darin, daß das beanspruchte Verfahren auch dann korrekte Bewegungsinformationen liefert, wenn herkömmliche Verfahren, die auf einer Zuordnung von örtlichen Signalverläufen in Folgebildern basieren, zu fehlerhaften Ergebnissen führen. Dieser Vorteil wird insbesondere dadurch erreicht, daß bei der Ermittlung der Bewegungsinformationen der aus dem Quellensignal entnommene zeitliche, ortsfeste Signalverlauf als zusätzliches Bestimmungskriterium zur Verfügung gestellt wird. Hierzu kann gemäß einer vorteilhaften Weiterbildung der Erfindung quellenseitig eine zeitliche Überabtastung des Signals erfolgen. Zeitliche Überabtastung bedeutet, es werden mehr Bewegungsphasen pro Zeiteinheit erzeugt, als für eine kontinuierliche Bewegungswiedergabe erforderlich sind. Weitere Vorteile der Erfindung ergeben sich aus der Erläuterung eines Ausführungsbeispiels anhand der Figuren.

Es zeigt
- Figur 1: ein Blockschaltbild zur grundsätzlichen Erläuterung des beanspruchten Verfahrens,
- Figur 2: ein Blockschaltbild eines ersten Übertragungssystems, bei dem die Erfindung verwendbar ist, und
- Figur 3: ein Blockschaltbild eines zweiten Übertragungssystems, bei dem die Erfindung verwendbar ist.

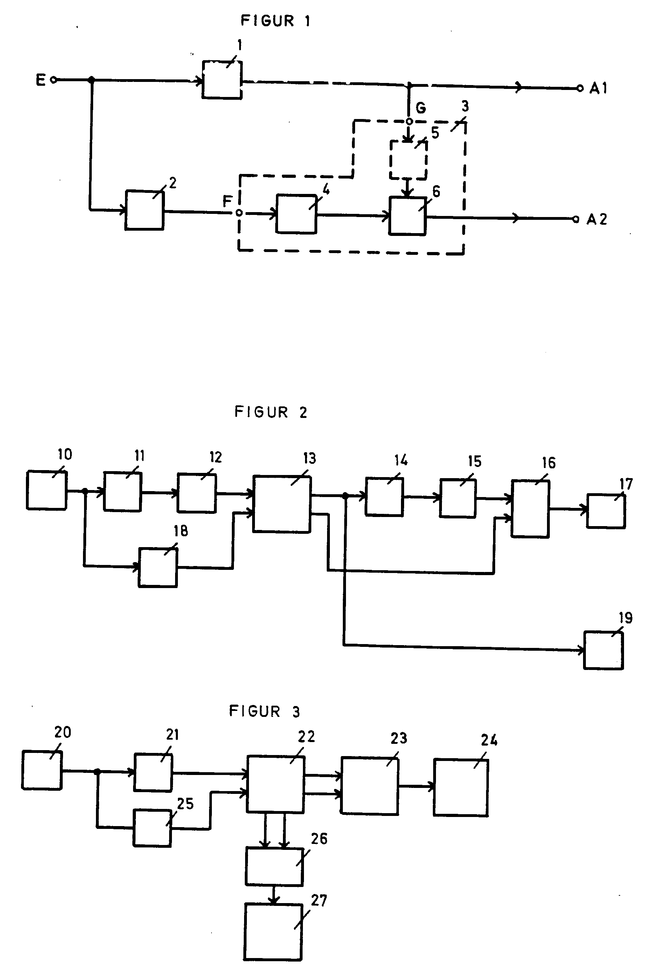

Die Figur 1 zeigt ein Blockschaltbild zur grundsätzlichen Erläuterung des beanspruchten Verfahrens. Dem Eingang E wird ein Videosignal zugeführt, welches den aufeinanderfolgenden Bildern einer Bildfolge entspricht. Dieses Signals, bei welchem es sich beispielsweise um ein 625-zeiliges zeilensprungfreies Videosignal mit einer Bildwechselfrequenz von 50 Hz handelt, wird zum einen einem Schaltungsblock 1 zur globalen Bewegungsschätzung und zum anderen über ein Verzögerungsglied 2, welches die Aufgabe hat, die dem Eingangssignal im Schaltungsblock 1 auferlegte Verzögerung zu kompensieren, einem Schaltungsblock 3 zur lokalen Bewegungszuordnung zugeführt.

Im Schaltungsblock 1, welcher beispielsweise zwei Bildspeicher aufweist, werden aufeinanderfolgende Bilder in Blöcke aufgeteilt, welche jeweils 64 Bildpunkte in Horizontal- und 64 Bildpunkte in Vertikalrichtung aufweisen. Aus jeweils zugehörigen Blöcken aufeinanderfolgender Bilder werden mittels einer Phasenkorrelationsmethode, wie sie beispielsweise aus dem oben genannten BBC-Report bekannt ist, für jeden der Blöcke mehrere Bewegungsvektoren ermittelt, die global Auskunft über die Bewegungsrichtungen und die -geschwindigkeiten innerhalb jedes Blockes geben. Diese Bewegungsvektoren, die am Ausgang des Schaltungsblockes 1 in Form von digitalen Wörtern zur Verfügung stehen, werden einem Ausgang A 1 und einem Eingang G des Schaltungsblockes 3 zur lokalen Bewegungszuordnung zugeführt.

Einem Eingang F des Schaltungsblockes 3 zur lokalen Bewegungszuordnung wird über das Verzögerungsglied 2 das am Eingang E anliegende Videosignal zugeführt. Vom Eingang F wird dieses Signal einer Schaltung 4 zugeführt, die beispielsweise 3 Bildspeicher aufweist und an derem Ausgang die Signalwerte jeweils zugehöriger Bildpunkte aus 3 aufeinanderfolgenden Bildern des Eingangssignals zur Verfügung stehen. Diese Signalwerte, die dem aus dem Quellensignal entnommenen, einem Bildpunkt zugehörigen zeitlichen Signalverlauf entsprechen, dienen als zusätzliches Bestimmungskriterium für die Ermittlung der lokalen Bewegungsinformationen, die in der Schaltung 6 durchgeführt wird.

Der Schaltung 6 werden ferner über den Eingang G - und ggfs. über eine Schaltung 5 zur Nachverarbeitung - die dem jeweiligen Block des momentan betrachteten Bildpunktes zugehörigen, im Rahmen der globalen Bewegungsschätzung ermittelten Vektoren, die jeweils einer örtlichen Linie entsprechen, in Form vom Amplitudenwerten zugeführt. In der Schaltung 6 wird nun unter Verwendung der dem zeitlichen Signalverlauf entsprechenden Amplitudenwerte als zusätzliches Bestimmungskriterium aus den im Rahmen der globalen Bewegungsschätzung ermittelten Bewegungsvektoren, die jeweils einen örtlichen Signalverlauf beschreiben, für jeden Bildpunkt der geeignetste gesucht. Dieser wird als lokale Bewegungsinformation aus Ausgang A2 der Schaltung zur Verfügung gestellt.

Beim vorstehend beschriebenen Verfahren wird folglich im Unterschied zum bekannten Stand der Technik der bekannte zeitliche Signalverlauf des Eingangssignals als Referenz für die lokale Bewegungszuordnung verwendet. Folglich wird beim beanspruchten Verfahren davon Gebrauch gemacht, daß der durch die Objektbewegung gebildete zeitliche Signalverlauf auch durch den örtlichen Signalverlauf dargestellt werden kann und umgekehrt.

Bei einer vorteilhaften Ausführungsform der Erfindung erfolgt senderseitig eine zeitliche Überabtastung des Signals, um den gewünschten zeitlichen Signalverlauf als Referenz für die lokale Bewegungszuordnung zu gewinnen. Für die Übertragung selbst wird das Signal dann wieder zeitlich unterabgetastet. Zeitliche Unterabtastung bedeutet, es werden weniger Bewegungsphasen pro Zeiteinheit übertragen, als für eine kontinuierliche Bewegungswiedergabe erforderlich sind. Beispielsweise kann das Signal senderseitig mit einer Bildwechselfrequenz von 50 Hz erzeugt und mit einer Bildwechselfrequenz von 25 Hz oder weniger übertragen werden.

Die Figur 2 zeigt ein erstes Übertragungssystem, bei dem die Erfindung verwendet werden kann. In einer Aufnahmekamera 10 wird ein zeilensprungfreies Videosignal mit 625 Zeilen pro Vollbild und einer Bildwechselfrequenz von 50 Hz erzeugt. Dieses Signal wird in einem Zeilensprunggenerator 11 in ein Zeilensprungsignal umgewandelt, wobei bei hohen Bewegungsgeschwindigkeiten im Eingangsbild ein echtes Zeilensprungsignal und bei niedrigen Bewegungsgeschwindigkeiten im Eingangsbild ein synthetisches Zeilensprungsignal erzeugt wird. Dieses Zeilensprungsignal wird über einen verbesserten Farbsignal-Coder 12, wie er in jüngster Zeit aus der Literatur bekannt wurde, einem Übertragungskanal 13 zugeführt. Diesem werden ferner die in einer Schaltung 18 zur Bewegungsschätzung aus der Eingangsbildfolge gewonnenen Bewegungsinformationen zugeleitet.

Auf der Empfangsseite kann das Ausgangssignal des Übertragungskanales 13 auf einem herkömmlichen Standardempfänger 19 wiedergegeben werden, wobei wegen der oben genannten bewegungsabhängigen Zeilensprungsignalgenerierung kaum Bewegungsrucken auftritt. Ferner kann das Ausgangssignal des Übertragungskanals 13 über einen verbesserten Farbsignal-Decoder 14, eine Schaltung 15 zur Wiedererzeugung eines zeilensprungfreien Signals, deren Arbeitsweise invers zu der des Zeilensprunggenerators 11 ist, und eine Schaltung 16 zur bewegungskompensativen Interpolation, in welcher unter Verwendung der übertragenen Bewegungsinformationen ein Videosignal mit 625 Zeilen regeneriert wird, auf einem verbesserten Empfänger 17 dargestellt werden.

Die Figur 3 zeigt ein zweites Übertragungssystem, bei dem die Erfindung verwendet werden kann. In einer HDTV-Kamera 20 wird ein zeilensprungfreies Videosignal mit 1250 Zeilen pro Vollbild und einer Bildwechselfrequenz von 100 Hz erzeugt. Dieses Signal wird beispielsweise mittels einer zeitlichen Unterabtastung in einem Schaltungsblock 21 in ein zeilensprungfreies Signal mit einer Bildwechselfrequenz von 25 Hz umgewandelt und einem Übertragungskanal 22 zugeführt. Diesem werden ferner die in einer Schaltung 25 zur Bewegungsschätzung aus der Eingangsbildfolge gewonnenen Bewegungsinformationen zugeleitet.

Auf der Empfangsseite kann das Ausgangssignal des Übertragungskanals 22 unter Verwendung der Bewegungsinformationen mittels einer bewegungskompensativen Interpolation im Schaltungsblock 23 in ein zeilensprungfreies Signal mit 1250 Zeilen und einer Bildwechselfrequenz von 100 Hz rückumgewandelt und auf einem HDTV-Bildschirm 24 dargestellt werden. Ferner kann das Ausgangssignal des Übertragungskanals 22 unter Verwendung der Bewegungsinformationen mittels einer Standardkonversion in einem Konverter 26 in eine andere Fernsehnorm umgewandelt und auf einem zugehörigen Bildschirm 27 dargestellt werden. So ist beispielsweise eine Konversion in ein Zeilensprungsignal mit 1125 Zeilen und einer Bildwechselfrequenz von 60 Hz, in ein Zeilensprungsignal mit 1050 Zeilen und 59,94 Hz Bildwechselfrequenz, in ein Zeilensprungsignal mit 625 Zeilen und 50 Hz Bildwechselfrequenz, in ein Zeilensprungsignal mit 525 Zeilen und 59,94 Bildwechselfrequenz oder in ein zeilensprungfreies Signal mit 1250 Zeilen und 50 Hz Bildwechselfrequenz möglich.

Im folgenden wird eine vorteilhafte Weiterbildung der Erfindung beschrieben. Untersuchungen haben gezeigt, daß insbesondere bei starken Helligkeitsschwankungen eines sich bewegenden Objektes kein dem dem Quellensignal entnommenen zeitlichen Signalverlauf genau entsprechender örtlicher Signalverlauf bzw. keine dem zeitlichen Signalverlauf exakt entsprechende Bewegungsinformation ermittelt werden kann. Abhilfe schafft hier die Einführung eines Korrektursignals, welches die genannten Helligkeitsschwankungen bzw. -änderungen genau nachbildet. Es hat sich gezeigt, daß diese in Fernsehbildern auftretenden Helligkeitsschwankungen meistens einen weichen Änderungsübergang besitzen und deshalb durch einen linearen Verlauf gut anzunähern sind.

Bei den oben beschriebenen Ausführungsbeispielen wurde stets davon ausgegangen, daß quellenseitig ein zeitlich überabgetastetes Videosignal zur Verfügung steht, welches den bei der lokalen Bewegungszuordnung als zusätzliches Bestimmungskriterium benötigten zeitlichen Signalverlauf liefert. Das beanspruchte Verfahren ist aber auch dann verwendbar, wenn quellenseitig keine zeitliche Überabtastung erfolgt. In diesem Fall wird der als zusätzliches Bestimmungskriterium benötigte zeitliche Signalverlauf durch Heranziehen mehrerer mit der gegebenen Bildwechselfrequenz vorliegender Bilder gewonnen.

Bei den oben beschriebenen Ausführungsbeispielen liegen sowohl die im Rahmen der globalen Schätzung erhaltenen Bewegungsvektoren als auch die bei der lokalen Bewegungszuordnung ermittelten Bewegungsinformationen in Form von digitalen Wörtern vor.

Gemäß einer vorteilhaften Ausgestaltung der Erfindung wird jedem der im Rahmen der globalen Schätzung erhaltenen Bewegungsvektoren eine laufende Nummer zugeordnet. Die Aufgabe der lokalen Bewegungszuordnung besteht in diesem Fall darin, für jeden Bildpunkt die Nummer desjenigen Bewegungsvektors zu ermitteln, der dem zeitlichen Signalverlauf des Bildpunktes am besten entspricht. Als Bewegungsinformationen werden dann die bei der globalen Schätzung ermittelten Bewegungsvektoren und die genannten Nummern auf die Empfangsseite übertragen. Dies reduziert die zur Übertragung der Bewegungsinformationen insgesamt notwendige Datenrate. Auf der Empfangsseite können dann bei Bedarf die übertragenen Bewegungsvektoren und die übertragenen Nummern zu einer bewegungskompensativen Interpolation verwendet werden.

## Patentansprüche

1. Verfahren zur Ermittlung von Bewegungsinformationen aus Bildsignalen, bei dem aus einer Quellenbildfolge mittels einer globalen Bewegungsschätzung, bei der das Bild in große Blöcke unterteilt wird und korrespondierende Blöcke aufeinanderfolgender Bilder miteinander verglichen werden, mehrere Bewegungsvektoren ermittelt werden und bei dem mittels einer lokalen Bewegungszuordnung unter Verwendung der ermittelten Bewegungsvektoren die lokale Verteilung von Bewegungen im Bild beschreibende Bewegungsinformationen gewonnen werden, **dadurch** **gekennzeichnet**, daß bei der lokalen Bewegungszuordnung zur Ermittlung der jedem Bildpunkt zugehörigen Bewegungsinformationen unter Verwendung von Amplitudenwerten, die den dem Quellensignal entnommenen zeitlichen, ortsfesten Signalverlauf beschreiben, aus den im Rahmen der globalen Bewegungsschätzung ermittelten Bewegungsvektoren der geeignetste gesucht wird.

2. Verfahren nach Anspruch 1, **dadurch** **gekennzeichnet**, daß die Quellenbildfolge mit einer im Vergleich zur übertragenen Bildwechselfrequenz erhöhten Bildwechselfrequenz erzeugt und die Bewegungsinformationen aus der Bildfolge erhöhter Bildwechselfrequenz gewonnen werden.

3. Verfahren nach Anspruch 1, **dadurch** **gekennzeichnet**, daß der als zusätzliches Bestimmungskriterium verwendete zeitliche Signalverlauf durch Heranziehen mehrerer mit der gegebenen Bildwechselfrequenz vorliegender Bilder gewonnen wird.

4. Verfahren nach Anspruch 1, 2 oder 3, **dadurch** **gekennzeichnet**, daß die im Rahmen der lokalen Bewegungszuordnung ermittelten Bewegungsinformationen zur Kompensation von Helligkeitsschwankungen mit einem linearen Korrektursignal beaufschlagt werden.

5. Verfahren nach einem oder mehreren der vorhergehenden Ansprüche, **dadurch** **gekennzeichnet**, daß jedem der im Rahmen der globalen Bewegungsschätzung ermittelten Bewegungsvektoren eine laufende Nummer zugeordnet wird und bei der lokalen Bewegungszuordnung die Nummer des Bewegungsvektors ermittelt wird, welcher dem zeitlichen Signalverlauf des betrachteten Bildpunktes am besten entspricht.

## Claims

1. Method of obtaining movement information from video signals, in which method a plurality of movement vectors are obtained from a source picture sequence by means of an overall movement assessment in which the picture is subdivided into large blocks and corresponding blocks in consecutive pictures are compared with one another, and in which method the local distribution of movements in units of movement information describing the picture are obtained by means of a local movement assignment using the movement vectors obtained, characterized in that to obtain the units of movement information associated with every pixel in the local movement assignment, the most suitable movement vectors are selected from those obtained as part of the overall movement assessment using amplitude values which describe the positionally fixed signal variation with respect to time derived from the source signal.

2. Method according to Claim 1, characterized in that the source picture sequence is generated with a higher picture frequency than the transmitted picture frequency and the units of movement information are obtained from the picture sequence with increased picture frequency.

3. Method according to Claim 1, characterized in that the signal pattern with respect to time used as an additional determination criterion is obtained by using a plurality of pictures available with the given picture frequency.

4. Method according to Claim 1, 2 or 3, characterized in that the units of movement information obtained as part of the local movement assignment are subjected to a linear correction signal to compensate for variations in brightness.

5. Method according to one or more of the preceding claims, characterized in that a serial number is assigned to each of the movement vectors obtained as part of the overall movement assessment and, in the local movement assignment, the number of the movement vector is found which best corresponds to the signal variation with respect to time of the pixel under consideration.

## Revendications

1. Procédé pour déterminer des informations de déplacement à partir de signaux d'images, selon lequel on détermine plusieurs vecteurs de déplacement à partir d'une suite d'images d'origine au moyen d'une estimation globale du déplacement, lors de laquelle on divise l'image en blocs de grande taille et on compare entre eux des blocs correspondants d'images successives, et selon lequel on obtient des informations de déplacement, qui décrivent la répartition locale de déplacements dans l'image, au moyen d'une association locale de déplacements, moyennant l'utilisation des vecteurs de déplacement déterminés, caractérisé en ce que, lors de l'association locale des déplacements, pour la détermination des informations de déplacement associées à chaque point d'image, on recherche à partir des vecteurs de déplacement, qui sont déterminés dans le cadre de l'estimation globale du déplacement, les vecteurs de déplacement les plus appropriés, moyennant l'utilisation de valeurs d'amplitude, qui décrivent l'allure fixe dans le temps des signaux, tirée du signal d'origine.

2. Procédé selon la revendication 1, caractérisé en ce que la suite d'images d'origine est produite avec une fréquence d'images qui est accrue par rapport à la fréquence d'images, qui est transmise et que les informations de déplacement sont obtenues à partir de la suite d'images possédant une fréquence accrue d'images.

3. Procédé selon la revendication 1, caractérisé en ce que l'allure dans le temps des signaux, qui est utilisée en tant que critère supplémentaire de détermination, est obtenue moyennant l'utilisation de plusieurs images présentes avec la fréquence d'images déterminée.

4. Procédé selon la revendication 1, 2 ou 3, caractérisé en ce que les informations de déplacement, qui sont déterminées dans le cadre de l'association logique de déplacement, sont chargées, pour la compensation de variations de la luminosité, avec un signal de correction linéaire.

5. Procédé selon une ou plusieurs des revendications précédentes, caractérisé en ce qu'un numéro courant est associé à chacun des vecteurs de déplacement déterminés dans le cadre de l'estimation globale du déplacement, et que, dans le cas de l'association locale du déplacement, le numéro du vecteur de déplacement, qui correspond le mieux à l'allure dans le temps du signal du point d'image considéré, est déterminé.
